# FASCICULE DE BREVET EUROPEEN

(11) **EP 0 932 233 B1**
(45) Date de publication et mention de la délivrance du brevet: **14.06.2006**
(21) Numéro de dépôt: 99440009.1
(22) Date de dépôt: 21.01.1999
(51) Int. Cl.: H02G 3/12

(54) **Pièce de jonction-recouvrement entre deux éléments voisins d'une suite linéaire montés dans un profilé récepteur**
Deckel-Übergangsstücks zwischen zwei Nachbarelementen einer Linearreihe zur Befestigung auf einer Profilschiene
Junction-cover piece between two adjoining elements of a linear series mounted into a holding profile

(30) Priorité: 21.01.1998 FR 9800752
(43) Date de publication de la demande: 28.07.1999
(73) Titulaire: REHAU S.A., 57340 Morhange (FR)
(72) Inventeur: Stengel, Christian, 57340 Ragrange (FR); Frey, Bertrand, 57340 Ragrange (FR)
(74) Mandataire: Metz, Paul

(56) Documents cités:
- FR-A- 2 584 243
- US-A- 4 952 163

## Description

L'invention se rapporte à une pièce de jonction-recouvrement entre deux éléments voisins disposés en suite linéaire, en particulier dans le montage de profilés de protection d'un système de distribution électrique, téléphonique ou autre dans lequel des conducteurs sont logés dans des moulures, goulottes, plinthes ou analogues.

Le montage, dans une plinthe ou dans un support de protection analogue de profil quelconque, d'éléments amovibles de façade tels que couvercles ou blocs techniques de raccordement électrique, téléphonique ou autre, doit à la fois tenir compte des dimensions propres des supports, tels qu'une plinthe normalisée, et de celles des éléments intégrés au système de distribution. La jonction bord à bord entre deux éléments successifs n'est pas toujours techniquement et esthétiquement parfaite en raison du fréquent défaut d'équerrage dans la découpe et de la netteté des bords découpés ce qui se traduit par une fente oblique ou un aspect de lèvres jointives. Même une jonction à bords parfaitement d'équerre manque d'esthétique et réclame un cache pour masquer l'impression de fente.

Par ailleurs, les obligations normatives imposent une barrière d'accès aux connexions électriques empêchant le passage d'un objet même de faible épaisseur ou de petite section.

Le problème est de fournir des moyens pour empêcher la pénétration d'un objet jusqu'aux conducteurs et d'assurer la protection et l'étanchéité du volume intérieur aux matières notamment aux poussières.

Les pièces de recouvrement existant actuellement présentent au moins trois défauts importants.
- elles ne sont pas monobloc,
- elles requièrent différentes manipulations pour leur mise en place,
- elles ne comportent pas de sécurité quant à la pénétration d'un objet vers les pièces sous tension électrique.

Usuellement, des moyens sont prévus pour maintenir et guider les parois frontales amovibles et déplaçables de protection le long du corps de la plinthe.

Il s'agit principalement soit de pièces simples du type platine de recouvrement soit de pièces constituées en plusieurs parties dont certaines à visser devant être posées à l'installation en même temps que les bandeaux de façade et les blocs formant prise entre deux de ces éléments successifs.

De tels moyens peuvent par exemple être constitués de rainures et de nervures, pénétrant dans les rainures et empêchant tout défaut de positionnement des bandeaux de façade montés sur la plinthe mais aussi toute pénétration de corps étrangers, tels que des poussières, des liquides, etc.

Cependant, une telle protection et étanchéité doivent être efficaces afin que toute pénétration de matières telles que poussière, voire liquides ou autres ne risque pas d'endommager les éléments à protéger par un tel montage et être complétées par une protection mécanique anti-pénétration.

On connaît par FR 2 585 243 et US 4,952,163 des plastrons pour goulottes ou plinthes dans lesquelles sont logés des conducteurs électriques.

L'invention concernant FR 2 585 243 porte sur un plastron constitué de deux pièces et un système de fixation comportant deux supports et des vis. Le montage de ce plastron nécessite la fixation des deux supports à la goulotte et de possibles ajustements en hauteur à l'aide d'une entretoise et en longueur par des bras longitudinaux. Il faut ensuite fixer le plastron par vissage.

Cette réalisation se compose de plusieurs éléments et nécessite plusieurs opérations pour son montage entrainant un prix de revient plus élevé et un coût de montage supérieur.

Dans US 4,952,163 on décrit une réalisation encore plus différente, s'éloignant notablement de la présente invention. Les éléments de fermeture ou d'obturation sont fixés sur les boîtiers contenant les appareillages électriques et non directement sur la goulotte comme dans la présente invention. En effet, les boîtiers dont il s'agit dans ce brevet sont situés à l'extérieur de la goulotte et non pas à l'intérieur. Il s'agit d'un type différent de boîtiers. De plus, les fermetures ou obturations sont latérales par rapport au corp des boîtiers, elles en obturent les chants et non pas un intervalle linéaire de séparation. Les couvercles décrits dans ce brevet ne peuvent pas être adaptés à la fente pouvant exister à la jonction entre deux bandeaux de façade.

Le but général de la présente invention est triple.

Il s'agit d'abord de fournir un élément de jonction-recouvrement qui complète la fermeture des intervalles du type fente pouvant subsister entre deux éléments voisins malgré la présence de moyens de guidage et d'étanchéité utilisés pour immobiliser le bandeau de façade de la plinthe.

Il s'agit ensuite d'empêcher la pénétration d'objet(s) même de faible épaisseur ou de petite section à proximité des connexions électriques.

Il s'agit enfin de fournir une pièce de jonction-raccordement monobloc qui peut être insérée frontalement par simple pression après la mise en place des différents autres éléments.

Un autre but de l'invention est de permettre une adaptation des éléments standards utilisés au niveau de la plinthe et des bandeaux de façade, aux différentes dimensions des ensembles ou modules de raccordement tels qu'un bloc-prise et analogue et un calage des bords en regard par la forme de sa patte déportée latéralement.

Un autre but encore de l'invention est de fournir des moyens permettant un démontage de tous les composants installés, sans les détruire et permettant ainsi, le cas échéant après avoir procédé à un complément ou à une modification d'installation, de réutiliser les éléments démontés.

Selon l'invention, ce problème est avantageusement résolu par une pièce de jonction-recouvrement entre deux pièces voisines comportant les caractéristiques énoncées à la revendication 1.

Selon une autre caractéristique de l'invention, l'embase sert de plaque de recouvrement à la fente de séparation.

Selon encore une autre caractéristique de l'invention, la plaque déportée latéralement, délimite avec l'embase un volume d'appui et décalage formant un épaulement.

Selon encore une dernière caractéristique de l'invention, la pièce de jonction-recouvrement peut être réalisée d'une seule pièce en matière plastique par moulage selon le procédé d'injection.

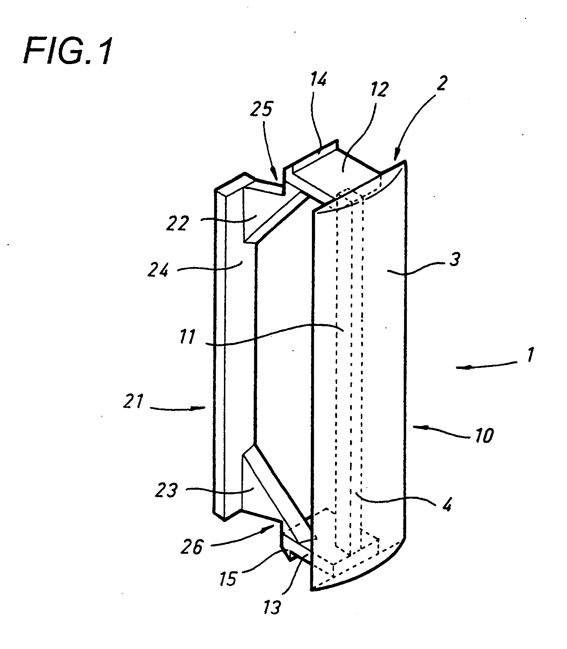

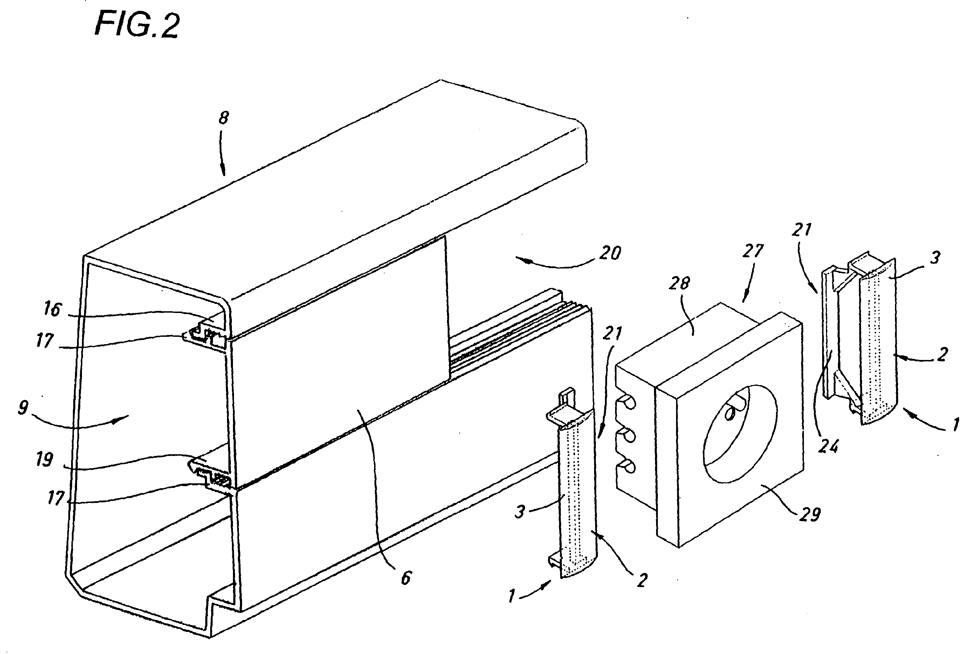

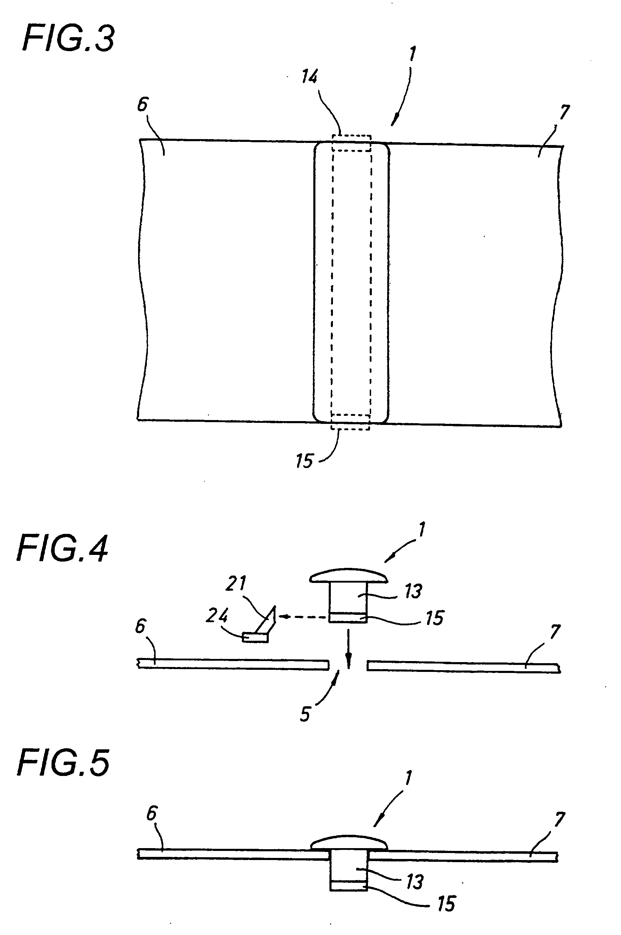

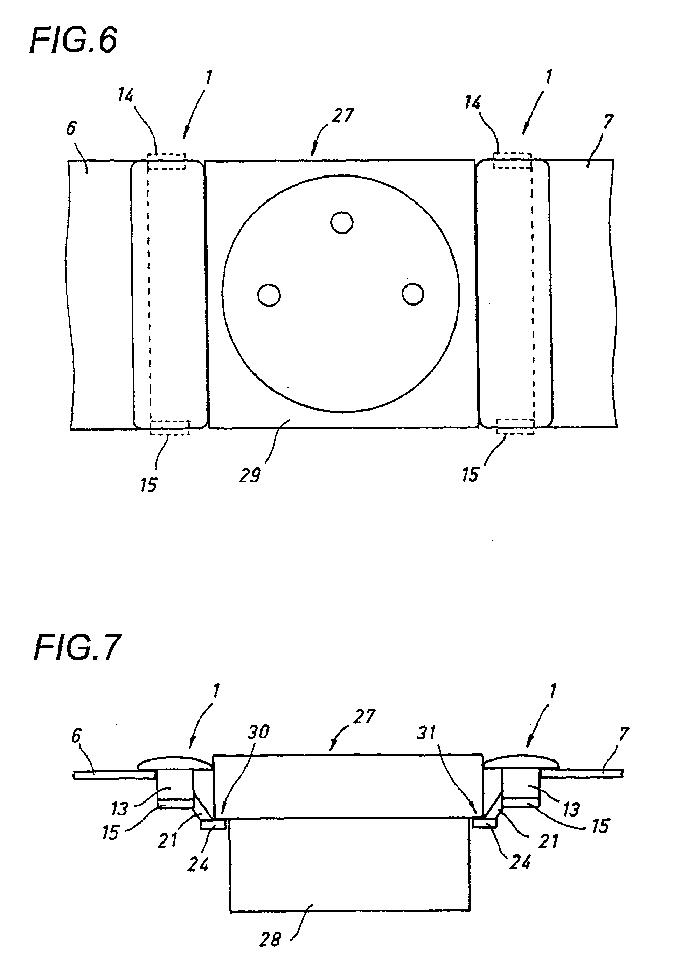

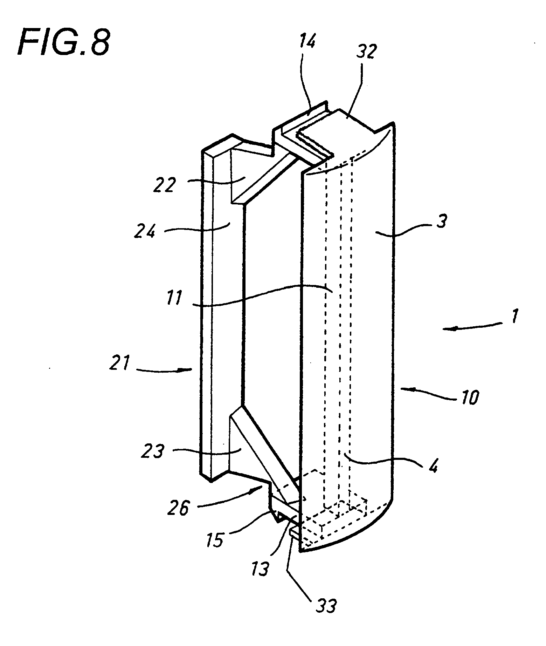

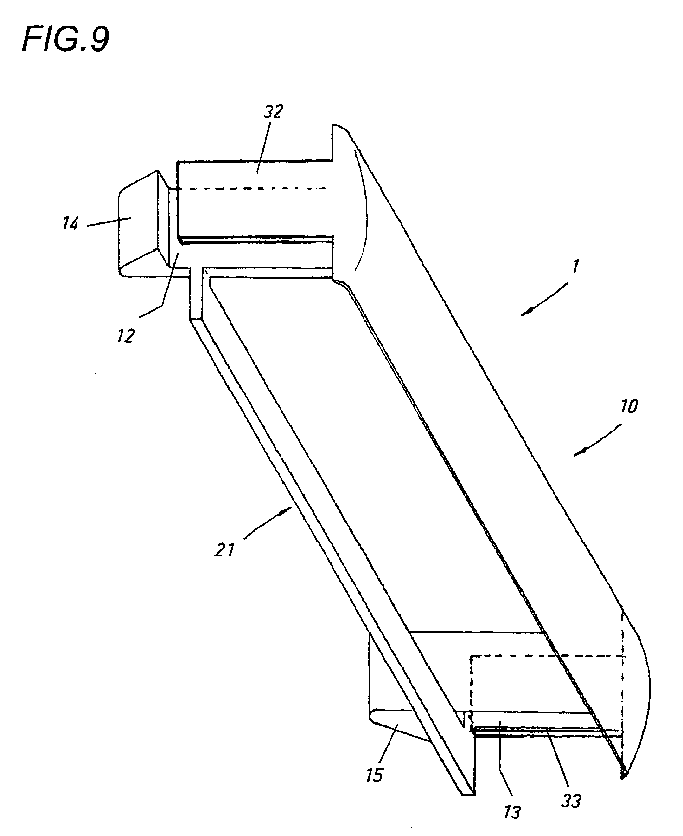

D'autres avantages de l'invention ressortiront plus clairement à la lecture de la description ci-après, effectuée en référence aux dessins annexés dans lesquels :
. la figure 1 représente, vue en perspective dans son ensemble, la pièce de jonction-recouvrement selon l'invention,
. la figure 2 représente, vue en perspective, les différents composants d'un système de distribution, tels qu'une plinthe, un bandeau de façade, un bloc-prise, et la pièce de jonction-recouvrement selon l'invention, dans la position respective qu'ils prennent avant le montage ;
. la figure 3 représente une vue frontale de la fente existant entre deux éléments voisins recouverte par l'embase de la pièce de jonction-recouvrement selon l'invention ;
. la figure 4 est une vue de profil de deux bandeaux de façade successifs au niveau de la fente avant la pose de la pièce de jonction-recouvrement selon l'invention ;
. la figure 5 est une vue identique à celle de la figure 4 montrant la pièce de jonction-recouvrement selon l'invention en place dans la fente ;
. la figure 6 est une vue frontale illustrant le cas d'un bloc-prise installé entre deux bandeaux de façade successifs d'une même plinthe avec deux pièces de jonction-recouvrement de part et d'autre de celui-ci ;
. la figure 7 est une vue de profil de la figure 6, montrant la disposition des pattes déportées latéralement des pièces de jonction-recouvrement par rapport aux chants et aux épaulements de la partie supérieure d'un bloc-prise ;
. les figures 8 et 9 sont des vues en perspective de deux variantes comportant des pattes de pincement en extrémité.

La pièce de jonction-recouvrement selon l'invention représentée dans son ensemble sur la figure 1 comporte un corps 1 formé d'une embase 2 et d'une âme 3 perpendiculaire à l'embase 2. L'embase 2 présente une sous-face 4 de laquelle naît l'âme 3. Cette dernière traverse une fente 5 entre deux éléments techniques et/ou décoratifs successifs voisins par exemple des bandeaux de façade 6 et 7 juxtaposés appartenant à une plinthe 8 à corps creux 9 abritant des conducteurs électriques (non représentés).

Classiquement, l'embase 2 présente un dos 10 bombé, ce qui limite les risques d'accrochage d'un outil de montage, tel qu'un tournevis par exemple, et procure une certaine résistance au centre de l'embase et une élasticité à ses extrémités.

Dans la version représentée sur les figures, l'âme 3 se présente sous la forme d'une nervure médiane longitudinale 11 terminée à chacune de ses extrémités par une languette transversale d'encliquetage 12 et 13 bordée chacune par une arête inférieure de retenue 14 et 15 destinée à s'engager dans les structures linéaires d'encliquetage 16 et 17 sur lesquelles viennent s'immobiliser les saillies linéaires arrière 18 et 19 des bandeaux de façade 6,7 obturant l'ouverture linéaire 20 de la plinthe 8.

L'âme 3 se prolonge par une patte 21 déportée latéralement de forme générale en U évasé qui se compose de deux branches obliques 22 et 23 réunies entre elles à leur partie inférieure par une traverse anti-pénétration 24. Cette traverse 24 affecte la forme d'une barre ou d'un plan parallèle à la sous-face de l'embase. Comme on peut le voir sur les figures, cette traverse 24 est sécable par la brisure d'amincissements 25 et 26 existant au niveau du raccordement des extrémités des branches 22 et 23 avec l'embase 2 ou les languettes 12 et 13. On peut ainsi dissocier facilement la patte déportée 21 de l'embase 2 dans le cas de deux bandeaux successifs jointifs (figures 4 et 5).

Dans le cas d'un bloc-prise 27 par exemple celui représenté sur les figures à boîtier 28 et à paroi frontale 29, les pattes déportées latéralement 21 viendront après engagement d'immobilisation par l'avant en appui chacune par leur traverse anti-pénétration 24 contre les épaulements 30 et 31 existant entre le boîtier 28 et la paroi frontale 29 tandis que la sous-face de l'embase 2 portera sur l'extrémité du bandeau de façade adjacent 6 ou 7 assurant ainsi deux fonctions simultanément. La première concerne un appui-calage et la seconde la plus importante une barrière anti-pénétration pour un objet quelconque même de faible épaisseur ou de petite section.

Comme déjà indiqué la pièce de jonction-raccordement vient s'insérer entre deux bandeaux successifs de façade ou entre l'extrémité d'un bandeau et un bloc-prise électrique ou un élément ou composant technique prévu pour être monté sur une plinthe ou analogue et ceci par l'avant lorsque les éléments voisins sont posés mais libres en coulissement.

Cette facilité de montage représente un avantage important recherché par les installateurs.

La nervure centrale 11 formant l'âme 3 constitue l'épaisseur de matière qui vient se placer dans l'espace ménagé entre les deux extrémités des bandeaux successifs après avoir brisé la patte 21 déportée latéralement dans le cas d'un raccordement simple (figures 3 à 5).

La pièce de jonction-raccordement est introduite dans un intervalle agrandi par translation des deux éléments voisins dans le cas d'une jonction entre un bloc-prise et un bandeau de façade (figures 2, 6 et 7). La pièce est introduite frontalement en biais par sa patte 21 déportée latéralement puis calée en appui d'une part par la sous-face de son embase 2 contre l'extrémité du bandeau adjacent de façade et d'autre part par la traverse anti-pénétration 24 contre l'épaulement de sous-face du bloc-prise 27.

On peut imaginer une variante selon laquelle l'espace existant entre la sous-face de l'embase 2 et la traverse anti-pénétration 24 serait égal à l'épaisseur de la paroi frontale 29 du bloc-prise 27. Dans ce cas, pour un maintien optimal, la face côté extérieur de la paroi frontale sera à fleur avec la sous-face de l'embase. Cette solution présente l'avantage d'une continuation d'esthétique et d'un calage accrochage de la pièce de jonction-recouvrement sur le chant adjacent de la paroi frontale du bloc-prise tout en servant de butée de position.

Sur la figure 3 est représentée la pièce de jonction-recouvrement en place entre des éléments voisins dont les contacts sont à préserver des pénétrations fortuites ou volontaires tout en permettant une adaptation aux différentes dimensions que peuvent prendre des composants normalisés mais ayant des longueurs ou largeurs chaque fois différentes.

Les figures 4 et 5 montrent l'étape avant et après insertion de la pièce de jonction-recouvrement dans la fente qu'elle doit masquer et condamner.

La figure 6 représente un ensemble de bandeaux et de bloc-prises, une fois montés pour lequel les deux fentes créées sont cachées et obturées par utilisation d'une pièce de jonction-recouvrement selon l'invention.

Les figures 8 et 9 se rapportent à deux variantes particulières présentant, conformé dans chacune de leurs extrémités longitudinales, un moyen amélioré d'encliquetage avec effet de maintien par pincement. Ces moyens permettent à la pièce de jonction-recouvrement de venir s'encastrer avec immobilisation dans l'ouverture du profilé récepteur.

Ce moyen amélioré d'encliquetage reprend la languette transversale d'encliquetage 12 ou 13 conformée dans le corps de la pièce de jonction-recouvrement se terminant respectivement par l'arête 14 ou 15. On y adjoint une patte flexible de pincement 32 ou 33 doublant les languettes 12 ou 13 qui ont pour but de mieux immobiliser latéralement la pièce en supprimant la possibilité de mouvements de décalage dus au jeu et à la flexibilité des bords de l'ouverture des profilés de réception.

Chaque patte flexible présente une force de rappel élastique en direction longitudinale vers l'extérieur de la pièce.

Chaque patte est conformée dans le corps de la pièce. Elle présente une extrémité libre qui est celle située près de l'arête de retenue 14 ou 15 et une autre extrémité d'une seule pièce avec l'extrémité correspondante du dos 10.

Les deux variantes représentées ne diffèrent que dans la structure de patte déportée latéralement référencée 21.

## Revendications

1. Pièce de jonction-recouvrement entre deux éléments techniques ou décoratifs tels que bandeaux de façade, blocs-prise, et autres d'une plinthe dans laquelle sont logés des conducteurs électriques en vue de la distribution de l'énergie électrique du secteur dans une pièce, un bureau ou plus généralement un local, pièce de jonction-recouvrement comprenant un corps (1) formé d'une embase (2) à dos bombé et d'une âme (3) **caractérisée en ce que** le corps (1) est monobloc et formé d'une embase(2) prolongée en sous-face par une âme (3) perpendiculaire à son plan pour traverser la fenêtre séparant deux éléments voisins empêchant la pénétration d'un objet même de faible épaisseur ou de petite section vers les connexions électriques et délimitée à chacune de ses extrémités par des moyens de pose et de retenue par pression permettant un montage d'engagement par l'avant de la plinthe pour masquer une fente (5).

2. Pièce de jonction-recouvrement selon la revendication 1, **caractérisée en ce que** l'âme (3) se prolonge par une patte (21) déportée latéralement, terminée par une traverse anti-pénétration (24).

3. Pièce de jonction-recouvrement selon la revendication 1, **caractérisée en ce que** l'âme (3) est une nervure médiane (11) en sous-face de l'embase (2) destinée à venir occuper la fente (5).

4. Pièce de jonction-recouvrement selon la revendication 1, **caractérisée en ce que** la sous-face de l'embase (2) couvre entièrement la fente (5) de séparation entre deux éléments voisins.

5. Pièce de jonction-recouvrement selon la revendication 1, **caractérisée en ce que** le volume délimité par la sous-face de l'embase (2), l'âme (3) et la patte déportée latéralement (21) est un volume d'appui-calage pour le bord adjacent latéral de la paroi frontale (29) d'un bloc-prise (27).

6. Pièce de jonction-recouvrement selon la revendication 1, **caractérisée en ce que** le corps (1) monobloc est réalisé en matière plastique et par la technique du moulage par injection.

7. Pièce de jonction-recouvrement selon la revendication 1, **caractérisée en ce que** les moyens de pose et de retenue par pression présents à chacune des extrémités longitudinales de la pièce de jonction-recouvrement comportent des languettes transversales d'encliquetage (12) et (13) terminées chacune par une arête inférieure de retenue (14) et (15).

8. Pièce de jonction-recouvrement selon la revendication précédente, **caractérisée en ce que** les languettes (12) et (13) sont doublées par une patte flexible de pincement (32) et (33) en rappel élastique vers l'extérieur à une extrémité libre près de l'arête (14) ou (15) correspondante pour l'immobilisation de la pièce de jonction-recouvrement sur le profilé récepteur.

## Claims

1. Junction-cover piece between two functional or decorative elements, such as fascia strips, socket units and the like, of a plinth in which there is housed wiring for supplying electric energy from the mains supply to a room, to an office or, more generally, to premises, which junction-cover piece comprises a body (1) formed by a base (2), which has a convex back, and a web (3), **characterised in that** the body (1) consists of a single piece and is formed by a base (2) which is extended on the underside by a web (3) perpendicular to its plane in order to span the opening between two adjacent elements, preventing an object even of small thickness or of small cross-section from reaching the electrical connections, and which is delimited at each of its ends by pressure fitting and retaining means, allowing engaging mounting *via* the front of the plinth in order to conceal an opening (5).

2. Junction-cover piece according to claim 1, **characterised in that** the web (3) is extended by a lug (21) which is offset laterally and is terminated by an anti-penetration cross-piece (24).

3. Junction-cover piece according to claim 1, **characterised in that** the web (3) is a rib (11) in middle of the underside of the base (2), intended to occupy the opening (5).

4. Junction-cover piece according to claim 1, **characterised in that** the underside of the base (2) covers the separating opening (5) between two adjacent elements completely.

5. Junction-cover piece according to claim 1, **characterised in that** the space delimited by the underside of the base (2), the web (3) and the laterally offset lug (21) is a clamping-support space for the adjacent lateral edge of the front wall (29) of a socket unit (27).

6. Junction-cover piece according to claim 1, **characterised in that** the body (1) consisting of a single piece is made of plastics material by the injection-moulding technique.

7. Junction-cover piece according to claim 1, **characterised in that** the pressure fitting and retaining means present at each of the longitudinal ends of the junction-cover piece comprise transverse snap-fit tabs (12) and (13) which are each terminated by a lower retaining edge (14) and (15).

8. Junction-cover piece according to the preceding claim, **characterised in that** the tabs (12) and (14) are covered by a flexible gripping lug (32) and (33) with resilient return outwards at a free end close to the corresponding edge (14) or (15), for immobilising the junction-cover piece on the receiving profile.

## Patentansprüche

1. Deck-Übergangsstück zwischen zwei technischen oder dekorativen Elementen wie Fassadenblenden, Steckdosengehäusen und anderen Elementen einer Wandleiste, in der Elektrizitätsleiter zur elektrischen Energieverteilung aus dem Stromnetz in einem Zimmer, einem Büro oder allgemeiner in einer Räumlichkeit untergebracht sind, mit einem Körper (1) aus einem Sockel (2) mit gewölbtem Rücken und einem Steg (3), **dadurch gekennzeichnet, dass** der Körper (1) einstückig ist und sein Sockel (2) auf der Unterseite flächensenkrecht mit dem Steg (3) zum Durchdringen des die beiden benachbarten Elemente trennenden Schlitzlochs fortgesetzt ist, um selbst das Eindringen eines Objekts geringer Dicke oder kleinen Querschnitts zu den elektrischen Anschlüssen zu verhindern, und an jedem seiner Enden durch Druck-Positionier- und Rückhaltemittel begrenzt ist, um eine Frontmontage an der Wandleiste zum Verdecken eines Schlitzes (5) zu ermöglichen.

2. Deck-Übergangsstück nach Anspruch 1, **dadurch gekennzeichnet, dass** der Steg (3) durch eine seitlich versetzte Klaue (21) fortgesetzt wird, die in ein Querstück (24) mündet, das ein Durchdringen verhindert.

3. Deck-Übergangsstück nach Anspruch 1, **dadurch gekennzeichnet, dass** der Steg (3) eine an der Unterseite des Sockels (2) angeordnete Gurtrippe (11) ist, mit dem Zweck den Schlitz (5) auszufüllen.

4. Deck-Übergangsstück nach Anspruch 1, **dadurch gekennzeichnet, dass** die Unterseite des Sockels (2) den Schlitz (5) zum Trennen zweier benachbarter Elemente vollkommen bedeckt.

5. Deck-Übergangsstück nach Anspruch 1, **dadurch gekennzeichnet, dass** der von der Unterseite des Sockels (2), des Stegs (3) und der seitlich versetzten Klaue (21) eingegrenzte Raum ein Raum zum Abstützen/Verkeilen für die lateral angrenzende Seite der Vorderwand (29) eines Steckdosengehäuses (27) ist.

6. Deck-Übergangsstück nach Anspruch 1, **dadurch gekennzeichnet, dass** der aus einem Stück gefertigte Körper (1) aus Plastikmaterial mittels eines Spritzgussverfahrens gebildet ist.

7. Deck-Übergangsstück nach Anspruch 1, **dadurch gekennzeichnet, dass** die Druck-Positionier- und Rückhaltemittel, die an jedem Längsende des Deckel-Übergangsstücks angeordnet sind, quer liegende Einrastlaschen (12) und (13) aufweisen, an deren Ende jeweils eine Unterkante (14) und (15) zum Rückhalt angeordnet ist.

8. Deck-Übergangsstück nach vorangehendem Anspruch, **dadurch gekennzeichnet, dass** die Laschen (12) und (13) durch eine bewegliche Klemmkralle (32) und (33) doppelzüngig ausgebildet sind, welche von einem freien Ende bei der Kante (14) oder (15) nach außen elastisch rückstellbar ist, um eine Blockierung des Deckel-Übergangsstücks auf dem Rezeptorprofil zu erzielen.
